# DEMANDE DE BREVET EUROPEEN

(11) **EP 3 431 253 A1**
(43) Date de publication de la demande: **23.01.2019**
(21) Numéro de dépôt: 18305948.4
(22) Date de dépôt: 13.07.2018
(51) Int. Cl.: B29C 49/56, B29C 49/78, B29C 49/06, B29C 49/36, B29C 49/48

(54) **STATION DE FORMAGE COMPORTANT DES MOYENS DE DETECTION AUTOMATIQUE DE L'OUVERTURE DE SUPPORTS DE MOULE**

(30) Priorité: 21.07.2017 FR 1756925
(71) Demandeur: Sidel Participations, 76930 Octeville-sur-Mer (FR)
(72) Inventeur: HELLOUIN, Damien, 76930 Octeville-sur-mer (FR); DECHAMPS, Pierre, 76930 Octeville-sur-mer (FR)
(74) Mandataire: Grassin d'Alphonse, Emmanuel Jean Marie

(57) **Abrégé**

L'invention concerne une station (10) de formage de récipients en matériau thermoplastique par soufflage comportant :
- un carrousel (12) monté rotatif autour d'un axe (A) vertical sur une base (14) ;
- plusieurs unités (18) de moulage portées par le carrousel (12) ;
- chaque unité (18) de moulage comportant deux supports (22, 24) de moule montés mobiles entre une position ouverte et une position fermée ;
- un dispositif (42) de verrouillage des supports (22, 24) moule en position fermée commandé entre un état déverrouillé et un état verrouillé ;
caractérisée en ce que la station (10) de formage comporte des moyens pour détecter automatiquement lorsque les supports (22, 24) de moule de chaque unité (18) de moulage sont en position fermée indépendamment de l'état du dispositif (42) de verrouillage.

L'invention concerne aussi un procédé de mise en oeuvre de la station de formage.

## Description

### DOMAINE TECHNIQUE DE L'INVENTION

L'invention se rapporte à une station de formage de récipients en matériau thermoplastique par soufflage comportant :
- un carrousel monté rotatif autour d'un axe vertical sur une base ;
- plusieurs unités de moulage portées par le carrousel ;
- chaque unité de moulage comportant deux supports de moule montés mobiles entre une position ouverte et une position fermée ;
- un dispositif de verrouillage des supports moule en position fermée commandé entre un état déverrouillé et un état verrouillé.

### ARRIERE PLAN TECHNIQUE DE L'INVENTION

L'invention concerne une station de formage de récipients en matériau thermoplastique en grandes séries. Dans une telle station, des préformes chaudes sont conformées en récipients finaux par soufflage dans des moules. De manière connue, chaque moule est réalisé en au moins deux parties qui sont susceptibles d'être jointes pour reconstituer une empreinte complète du récipient à produire.

Chaque moule est monté dans une unité de moulage. Pour permettre de produire des récipients de modèles différents, chaque partie de moule est fixé de manière démontable dans un support de moule associé de l'unité de moulage. Les supports de moule sont mobiles l'un par rapport à l'autre entre une position ouverte, dans laquelle les deux parties de moules sont écartées, et une position fermée, dans laquelle les deux parties de moule sont jointes. Lorsqu'on souhaite changer de modèle de récipient, il suffit de démonter les moules actuels des supports de moule pour les remplacer par de nouveaux moules.

Pour permettre la réalisation de récipients en grandes séries, plusieurs unités de moulage sont portées à la périphérie d'un carrousel rotatif qui tourne en continu. Les préformes sont reçues dans les moules en un point d'entrée déterminé, tandis que les récipients sont extraits des moules en un point de sortie déterminé. La rotation du carrousel et certaines opérations sont commandées par une unité électronique de commande de la station de formage.

Pour permettre l'insertion d'une nouvelle préforme et l'extraction d'un récipient fini, les supports de moule sont commandés dans leur position ouverte. Ainsi, durant leur trajet sur un secteur angulaire s'étendant depuis le point de sortie jusqu'au point d'entrée, les moules sont maintenus en position ouverte.

Les préformes sont conformées en récipients dans les unités de moulage par soufflage durant leur transport depuis le point d'entrée jusqu'au point de sortie. Durant tout leur trajet depuis le point d'entrée jusqu'au point de sortie, il est impératif que les supports de moule occupent une position fermée dans laquelle les deux parties de moule sont jointes.

En effet, pour éviter d'endommager les moules lors de leur fermeture, au moins l'une des deux parties de moule est montée flottante avec un jeu limité sur son support de moule. Pendant le soufflage, un fluide comprimé à la même pression que le fluide de soufflage, par exemple 40 bars, est injecté dans une chambre de compensation comprise entre le support de moule et la partie de moule flottante pour plaquer cette dernière contre l'autre partie de moule. Ceci permet d'obtenir des récipients avec un plan de joint peu visible.

Or, si les supports de moule sont ouverts au moment où le fluide sous pression est injecté dans la chambre de compensation, la partie de moule flottante est poussée par la pression avec une force suffisante pour arracher ses moyens de fixation sur le support de moule. La partie de moule est ainsi éjectée. Une telle partie de moule peut peser jusqu'à plusieurs dizaines de kilogrammes. L'éjection de la partie de moule provoque ainsi des dommages conséquents à la station de formage et met en danger l'intégrité physique des opérateurs humains situés à proximité.

Pour garantir que les deux parties de moule soient bien jointes sans provoquer l'ouverture des supports de moule, ces derniers sont verrouillés en position fermée par un dispositif de verrouillage commandé.

Cependant, il est possible que dans certaines circonstances, le dispositif de verrouillage puisse être commandé dans son état verrouillé sans que les supports de moule ne soient dans leur position fermée.

Les déplacements des supports de moule sont commandés entre leurs positions ouverte et fermée par une rainure de came fixe par rapport à une base du carrousel qui agit sur un bras de came qui est porté par le carrousel. Le bras de came est lié mécaniquement aux supports de moule par une chaîne cinématique de commande comportant plusieurs organes. Par exemple, le bras de came est lui-même lié à un arbre de commande qui est lié rigidement à un bras de manivelle commandant les déplacements des supports de moule.

Si le bras de came était lié de manière trop rigide à l'arbre de commande, certains organes de la chaîne cinématique seraient sujets à des ruptures fréquentes, par exemple lorsqu'une préforme se trouve mal positionnée entre les deux parties de moule et empêche la fermeture du moule. Pour éviter ces ruptures trop fréquentes, il est connu d'autoriser une légère rotation avec un couple résistant important du bras de came par rapport à l'arbre de commande. Ainsi, en cas d'empêchement de la fermeture des moules, le bras de came pivote légèrement par rapport à l'arbre de commande pour éviter la rupture d'un organe.

Après pivotement, le bras de came ne revient pas dans sa position d'origine. Le moule est donc entrouvert lorsque la came arrive dans le tronçon de rainure de came supposé commander la fermeture. Généralement, l'amplitude du pivotement est tout juste suffisante pour interdire au dispositif de verrouillage d'être commandé vers son état verrouillé. Par exemple, un pêne du dispositif de verrouillage porté par un premier support de moule se retrouve en butée contre une partie pleine de l'autre support de moule au lieu d'être inséré dans une gâche dudit autre support de moule. Dans ce cas, le dispositif de verrouillage ne peut être commandé dans son état verrouillé. L'unité de commande de la station de formage déclenche une alerte pour indiquer aux opérateurs humains qu'il est nécessaire de régler la position angulaire du bras de came avant de pouvoir réutiliser cette unité de moulage.

Cependant, dans certains cas assez rares, l'amplitude de pivotement du bras de came est suffisamment importante pour permettre au dispositif de verrouillage d'être commandé en état verrouillé tandis que les supports de moule occupent une position d'ouverture intermédiaire. Par exemple, le pêne de verrouillage peut être coulissé sans être inséré dans la gâche de l'autre support de moule. Les deux supports de moule sont alors libres de bouger vers leur position totalement ouverte. Etant donné que le dispositif de verrouillage est en état verrouillé, l'unité de commande de la station de formage agit comme si les supports de moule étaient fermés. On se retrouve alors dans la situation décrite précédemment dans laquelle la partie de moule flottante risque d'être éjectée.

L'invention propose une solution pour éviter de se retrouver dans une telle situation.

### BREF RESUME DE L'INVENTION

L'invention propose une station de formage de récipients en matériau thermoplastique par soufflage comportant :
- un carrousel monté rotatif autour d'un axe vertical sur une base ;
- plusieurs unités de moulage portées par le carrousel ;
- chaque unité de moulage comportant deux supports de moule qui sont destinés à porter chacun une partie d'un moule, les supports de moule étant montés mobiles sur le carrousel entre une position ouverte dans laquelle les deux parties de moule sont écartées l'une de l'autre, et une position fermée dans laquelle les deux parties de moule sont jointes ;
- des organes mobiles de commande des supports de moule qui sont liés mécaniquement entre eux, les organes mobiles et les supports de moule formant une chaîne cinématique ;
- un dispositif de verrouillage des supports moule en position fermée commandé entre un état déverrouillé et un état verrouillé ;
caractérisée en ce que la station de formage comporte des moyens pour détecter automatiquement lorsque les supports de moule de chaque unité de moulage sont en position fermée indépendamment de l'état du dispositif de verrouillage.

Selon d'autres caractéristiques de l'invention :
- les moyens de détection comportent au moins un capteur, et au moins une cible associée à chaque unité de moulage qui est apte à être détectée par le capteur lorsqu'elle passe à portée du capteur, la position de la cible dépendant uniquement de la position des supports de moule par rapport au carrousel ;
- le capteur est un capteur binaire qui délivre un signal d'une première valeur déterminée lorsqu'une cible est détectée et un signal d'une deuxième valeur déterminée lorsque qu'aucune cible n'est détectée ;

- le capteur est un capteur sans contact, tel qu'un capteur inductif ;
- le capteur est un capteur de position qui comporte un interrupteur qui est commuté par contact avec la cible ;
- les moyens de détection comportent un capteur fixe par rapport à la base ; et deux cibles dont chacune est fixée à un des supports de moule de chaque unité de moulage à la même hauteur que le capteur, chaque cible étant agencée pour être détectée lors de la rotation du carrousel, les cibles étant écartées l'une de l'autre lors du passage de la position fermée à une position ouverte des supports de moule ;
- en position fermée des supports de moule, l'écart entre les deux cibles n'est pas détectable par le capteur, tandis que dans une position ouverte des supports de moule, l'écart entre les deux cibles est détecté par le capteur ;
- les moyens de détection comportent deux capteurs fixes par rapport à la base, les capteurs étant décalés verticalement l'un par rapport à l'autre ; et deux cibles dont chacune est fixée à un des supports de moule de chaque unité de moulage, au moins la cible fixée sur le support de moule arrière par rapport au sens de déplacement de l'unité de moulage étant agencée pour être détectée uniquement par un seul des deux capteurs, l'autre cible étant détecté par l'autre des deux capteurs, les cibles étant écartées l'une de l'autre lors du passage de la position fermée à une position ouverte des supports de moule ;
- les supports de moule sont considérés comme fermés lorsque les deux capteurs détectent une cible à un intervalle de temps inférieur ou égal à une durée déterminée, les supports de moule étant considérés comme ouvert lorsque l'intervalle est supérieur à ladite durée déterminée ;
- les supports de moule sont considérés comme fermés lorsque les cibles sont détectées simultanément par les deux capteurs ;
- la cible est fixée à l'un des éléments de la chaîne cinématique de chaque unité de moulage ;
- chaque unité de moulage comporte un capteur associé monté fixe sur le carrousel ;
- un capteur est monté fixe par rapport à la base ;
- la cible est à portée du capteur uniquement lorsque les supports de moule sont en position fermée et hors de portée du capteur lorsque les supports de moule ne sont plus en position fermée ;
- la cible est à portée du capteur lorsque les supports de moule ne sont pas en position fermée, et hors de portée du capteur lorsque les supports de moule sont en position fermée ;
- la chaîne cinématique comporte un arbre de commande duquel s'étend un bras de manivelle qui est relié à chaque support de moule par une bielle associée ;
- la cible est fixée au bras de manivelle ;
- la cible est fixée sur l'arbre de commande ;
- la station de formage comporte des moyens pour déterminer la position angulaire du carrousel par rapport à sa base à tout instant ;
- la station de formage comporte un codeur angulaire qui est agencé pour déterminer la position angulaire du carrousel à tout instant.

L'invention propose aussi un procédé de commande d'une station de formage réalisée selon enseignements de l'invention, les supports des unités de moulage étant normalement commandés en position ouverte lors de leur passage dans un secteur angulaire déterminé par rapport à la base, et en position fermée sur le reste de leur trajet, caractérisé en ce que lorsque les supports de moule d'une unité de moulage sont détectés en position ouverte par les moyens de détection en dehors du secteur angulaire déterminé, une étape de mise en sécurité de la station de formage est déclenchée.

Selon d'autres caractéristiques du procédé :
- l'étape de mise en sécurité comporte une opération d'arrêt d'urgence de la station de formage ;
- l'étape de mise en sécurité comporte une opération d'inhibition d'une opération de soufflage liée à l'unité de moulage présentant les supports de moule détectés en position ouverte ;
- l'étape de mise en sécurité comporte une opération d'alerte d'un opérateur humain.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de dessus qui représente schématiquement une station de formage réalisée selon les enseignements de l'invention ;
- la figure 2 est une vue en coupe selon le plan de coupe 2-2 de la figure 1 qui représente une unité de moulage de la station de formage ;
- la figure 3 est une vue de dessus qui représente une unité de moulage de la station de formage dans laquelle les supports de moule sont commandés dans une position fermée ;
- la figure 4 est une vue similaire à celle de la figure 3 dans laquelle les supports de moule sont commandés dans une position ouverte ;
- la figure 5 est une vue de côté qui représente les supports de moule de la figure 4 en position ouverte ;
- la figure 6 est une vue similaire à celle de la figure 5 dans laquelle les supports de moule sont verrouillés en position fermée ;
- la figure 7 est une vue similaire à celle de la figure 4 dans laquelle les supports de moule occupe une position ouverte avec une amplitude inférieure à l'ouverture de la figure 4 ;
- la figure 8 est une vue de côté qui représente une chaîne cinématique de commande de l'ouverture et de la fermeture des supports de moule ;
- la figure 9 est une vue de côté qui représente les supports de moules en position fermée équipés de cibles agencées selon un premier mode de réalisation de l'invention ;
- la figure 10 est une vue de dessus des supports de moule de la figure 9 qui représente aussi un capteur fixe ;
- la figure 11 est une vue similaire à celle de la figure 9 qui représente les supports de moule dans une position ouverte ;
- la figure 12 est une vue similaire à celle de la figure 10 qui représente les moules dans une position ouverte ;
- la figure 13 est un diagramme qui représente la valeur d'un signal émis par le capteur fixe en fonction du temps lorsque les supports de moule occupent leur position fermée ;
- la figure 14 est un diagramme similaire à celui de la figure 13 qui représente le signal émis par le capteur fixe en fonction du temps lorsque les supports de moule occupent une position ouverte ;
- les figures 15 à 20 sont des vues similaires à celles des figures 9 à 14 qui représente un deuxième mode de réalisation de l'invention ;
- la figure 21 est une vue de côté qui représente la chaîne cinématique de commande de l'ouverture des supports de moule et qui comporte des moyens de détection réalisés selon un troisième mode de réalisation de l'invention ;
- la figure 22 est une vue similaire à celle de la figure 21 qui représente la chaîne cinématique munie de moyens de détection comprenant une cible et un capteur de position réalisés selon un quatrième mode de réalisation de l'invention ;
- la figure 23 est une vue en coupe selon le plan de coupe 23-23 de la figure 22 ;
- la figure 24 est une vue similaire à celle de la figure 23 dans laquelle la cible est tournée de manière à être à portée du capteur.

### DESCRIPTION DETAILLEE DES FIGURES

Dans la suite de la description, des éléments présentant une structure identique ou des fonctions analogues seront désignés par une même référence.

Dans la suite de la description, on adoptera, à titre non limitatif et à titre de repère géométrique local pour chaque unité de moulage, des orientations :
- longitudinale "L" dirigée d'arrière en avant selon les sens de déplacement des moules par rapport à la base du carrousel ;
- verticale "V" dirigée de bas en haut parallèlement à l'axe de rotation du carrousel ;
- transversale "T" dirigée de gauche à droite, radialement vers l'extérieur par rapport à l'axe de rotation du carrousel.

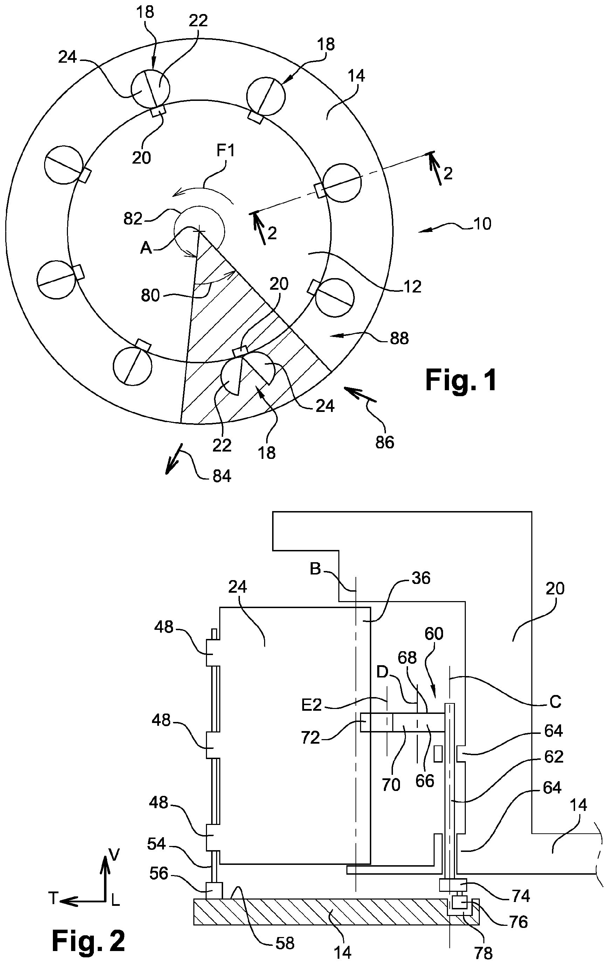

On a représenté de manière schématique à la figure 1 une station 10 de formage de récipients en matériau plastique par soufflage de préformes chaudes. Cette station 10 de formage est destinée à faire partie d'une installation de fabrication de récipients en grandes série. Une telle installation comporte par exemple, outre la station 10 de formage, une station de chauffage de préformes froides.

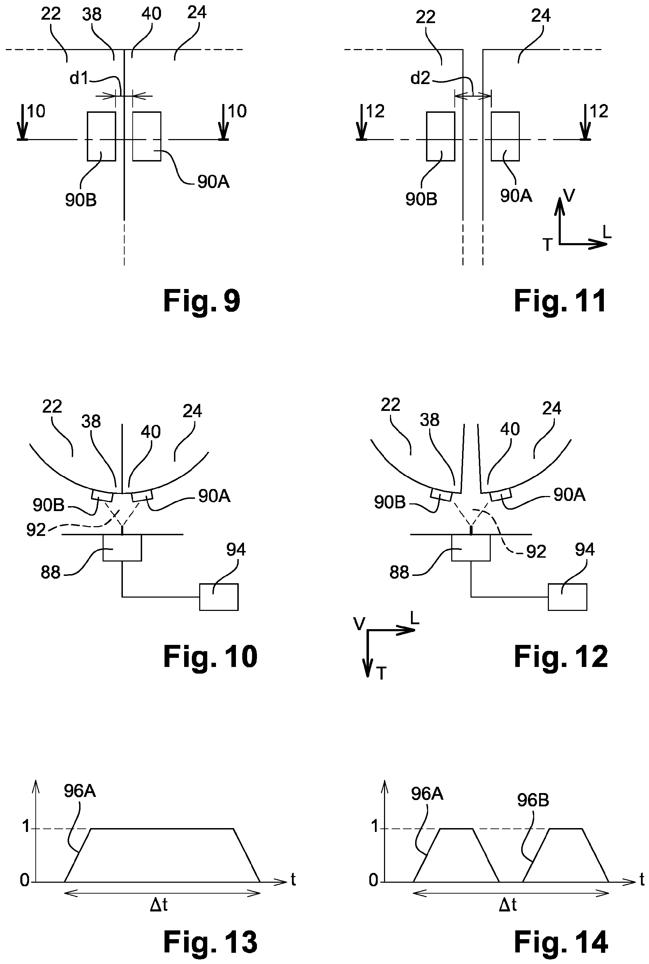

La station 10 de formage comporte un carrousel 12 monté rotatif autour d'un axe "A" vertical sur une base 14 fixe. Le carrousel 12 est ici entraîné en rotation continue dans un sens antihoraire, comme indiqué par la flèche "F1", par un moteur (non représenté). Le moteur est commandé par une unité 94 électronique de commande qui est représentée aux figures 10, 12, 16, 18, 21 et 22. Le moteur tourne à une vitesse très élevée de manière que la station de formage soit susceptible de produire au moins environ 2000 récipients par heure.

Plusieurs unités 18 de moulage portées par le carrousel 14. Les unités 18 de moulage sont réparties régulièrement à la périphérie du carrousel 14. Chaque unité 18 de moulage est équipée de moyens individuels de moulage d'un récipient.

Chaque unité 18 de moulage est ici portée par une potence 20 fixée au carrousel 14, comme cela est illustré à la figure 2.

Chaque unité 18 de moulage comporte deux supports 22, 24 de moule qui sont montés mobiles sur le carrousel 14. Les supports 22, 24 de moule sont ici plus particulièrement montés sur la potence 20 associée.

Les unités 18 de moulage étant toutes identiques, l'invention sera décrite pour une unité de moulage, l'invention étant applicable à toutes les unités de moulage.

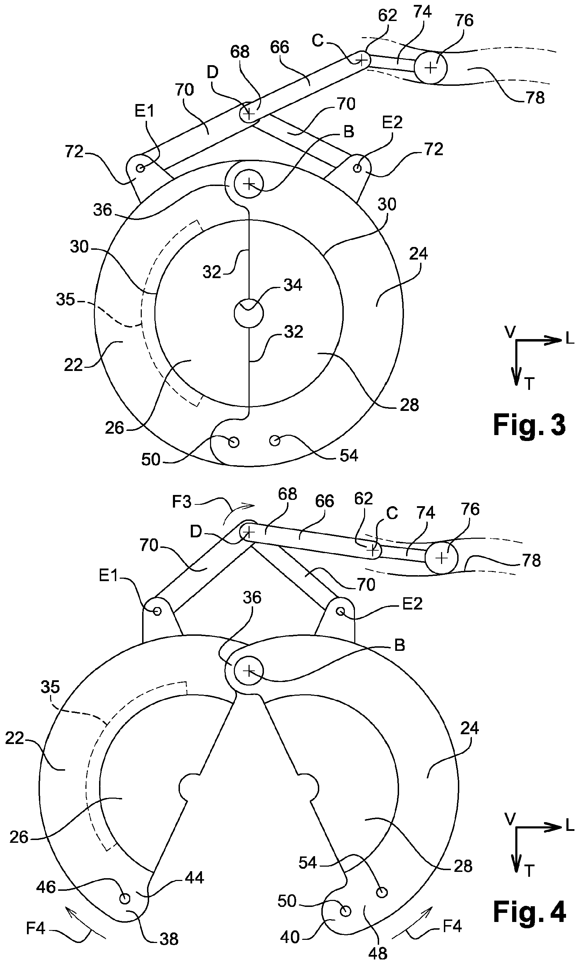

Chaque support 22, 24 de moule est destiné à une partie 26, 28 d'un moule, comme illustré aux figures 3 et 4. Un moule présente en effet au moins deux parties 26, 28 hémicylindriques présentant chacune une face 30 externe verticale cylindrique, destinée à être tournée vers le support 22, 24 de moule associé, et une face 32 interne verticale plane qui comporte une demi-empreinte du récipient à former. Lorsque les deux parties 26, 28 de moule sont jointes par leurs faces 32 internes, elles délimitent ainsi une cavité formant l'empreinte du récipient à former. Cette cavité débouche verticalement vers le haut par un passage 34 pour un col du récipient ou de la préforme.

Les supports 22, 24 de moule sont montés mobiles sur le carrousel 14 entre une position ouverte dans laquelle les deux parties 26, 28 de moule sont écartées l'une de l'autre, comme représenté à la figure 4, et une position fermée dans laquelle les deux parties 26, 28 de moule sont jointes par leur face 32 interne, comme illustré à la figure 3.

Pour garantir que les faces 32 internes des deux parties 26, 28 de moule soient jointes correctement lors de l'opération de moulage, il est connu d'interposer une chambre 35 de compensation entre la face 30 externe d'au moins une partie 26 de moule et son support 22 de moule. Ladite partie 26 de moule est montée coulissante avec un faible débattement entre une position rétractée vers le support 22 de moule et une position étendue en direction de l'autre partie 28 de moule. Lors d'une opération de soufflage, cette chambre 35 de compensation est alimentée avec un fluide sous pression comprimé pour pousser la partie 26 de moule vers sa position étendue.

Les supports 22, 24 de moule sont ici montés pivotant l'un par rapport à l'autre autour d'une charnière 36 d'axe "B" vertical. Chaque support 22, 24 de moule comporte ainsi un bord 38, 40 vertical libre opposé à la charnière 36. Les deux bords 38, 40 libres sont ainsi écartés en position ouverte des supports 22, 24 de moule, et jointifs en position fermée des supports 22, 24 de moule.

Le plan de joint entre les deux parties 26, 28 de moule est agencé transversalement. Ainsi, la charnière 36 est agencé du côté de l'axe "A" de rotation du carrousel 14, tandis que les bords 38, 40 libres sont agencés transversalement vers l'extérieur du carrousel 14. De cette manière, l'un des supports de moule, dit support 24 de moule avant, passe chronologiquement avant l'autre support de moule, dit support 22 de moule arrière, par un point fixe donné lors de la rotation du carrousel 14. De manière non limitative, le support 22 de moule arrière est ici celui qui comporte la chambre 35 de compensation.

Pour garantir que les supports 22, 24 de moule garderont leur position fermée durant l'opération de soufflage, ils sont équipés d'un dispositif 42 de verrouillage des supports 22, 24 de moule en position fermée. Le dispositif 42 de verrouillage commandé entre un état déverrouillé et un état verrouillé.

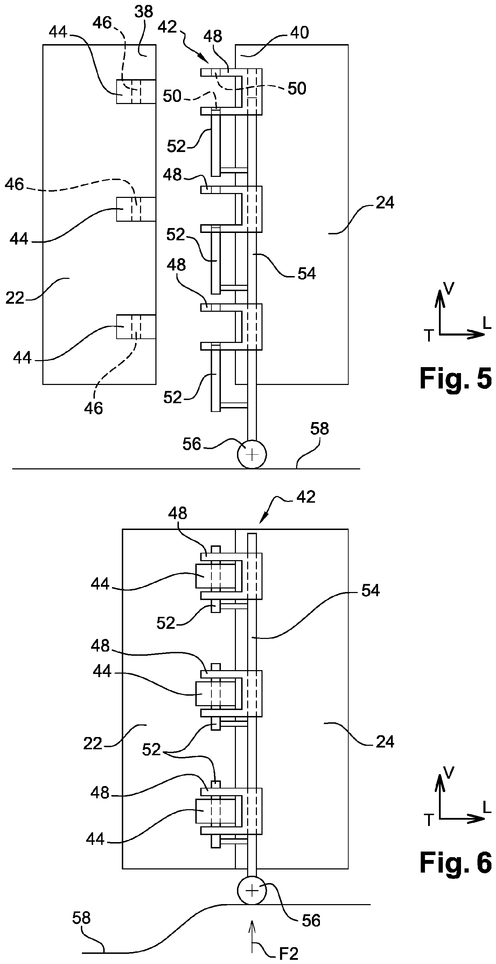

Comme représenté aux figures 5 et 6, le dispositif 42 de verrouillage comporte ici des oreilles 44 agencées en saillie vers l'extérieur sur le bord libre l'un des supports de moule, ici le bord 38 libre du support 22 de moule arrière. Les oreilles 44 s'étendent dans un plan horizontal et elles sont agencées verticalement l'une au-dessus de l'autre le long du bord 38 libre. Elles sont chacune traversées verticalement d'une gâche 46. Les gâches 46 sont ici coaxiales verticalement. Les oreilles 44 sont ici au nombre de trois.

L'autre support de moule, ici le support 24 de moule avant, est muni d'étriers 48 en forme de "U". Chaque étrier 48 comporte deux ailes s'étendant parallèlement dans un plan horizontal. Les ailes de l'étrier sont traversées verticalement d'orifices 50 de guidage. Les orifices 50 de guidage sont coaxiaux verticalement. Les étriers sont agencés verticalement l'un au -dessus de l'autre le long du bord 40 libre du support 24 de moule. Le support 24 de moule avant comporte autant d'étrier 48 que le support 22 de moule arrière ne comporte d'oreilles 44.

Lorsque les supports 22, 24 de moule occupent leur position fermée, comme illustré à la figure 6, chaque oreille 44 est reçue entre les deux ailes d'un étrier 48 correspondant. Chaque gâche 46 est en coïncidence avec les orifices 50 de guidage de l'étrier 48.

Le dispositif 42 de verrouillage comporte en outre des pênes 52 formés par des doigts d'axe verticaux qui sont portés par le support 24 de moule avant. Les pênes 52 sont alignés verticalement avec les orifices 50 de guidage des étriers 48. Le support 24 de moule avant comporte autant de pênes 52 que d'étriers 48.

Chaque pêne 52 est monté coulissant verticalement sur le support 24 de moule avant entre une position extrême inférieure dans laquelle une extrémité supérieure libre du pêne 52 est agencée sensiblement au niveau de l'aile inférieure de l'étrier 48 associé, comme représentée à la figure 5, et une position extrême supérieure dans laquelle le pêne 52 est passé en travers des orifices 50 de guidage de l'aile inférieure et de l'aile supérieure de l'étrier 48 associé, comme représentée à la figure 6. La position extrême inférieure des pênes 52 correspond à un état déverrouillé du dispositif 42 de verrouillage, tandis que leur position extrême supérieure correspond à un état verrouillé du dispositif 42 de verrouillage.

Comme représenté à la figure 6, lorsque les supports 22, 24 de moule occupent leur position fermée, chaque pêne 52 traverse ainsi la gâche 46 de l'oreille 44 logée dans l'étrier 48 associé. Chaque pêne 52 empêche ainsi l'ouverture des supports 22, 24 de moule.

Dans la suite de la description, on considère que les supports 22, 24 de moule sont en position fermée lorsque les orifices 50 de guidage sont suffisamment en coïncidence avec les gâches 46 pour permettre le coulissement des pênes 52 vers leur état verrouillé en passant à travers les gâches 46 associées, comme illustré aux figures 3 et 6.

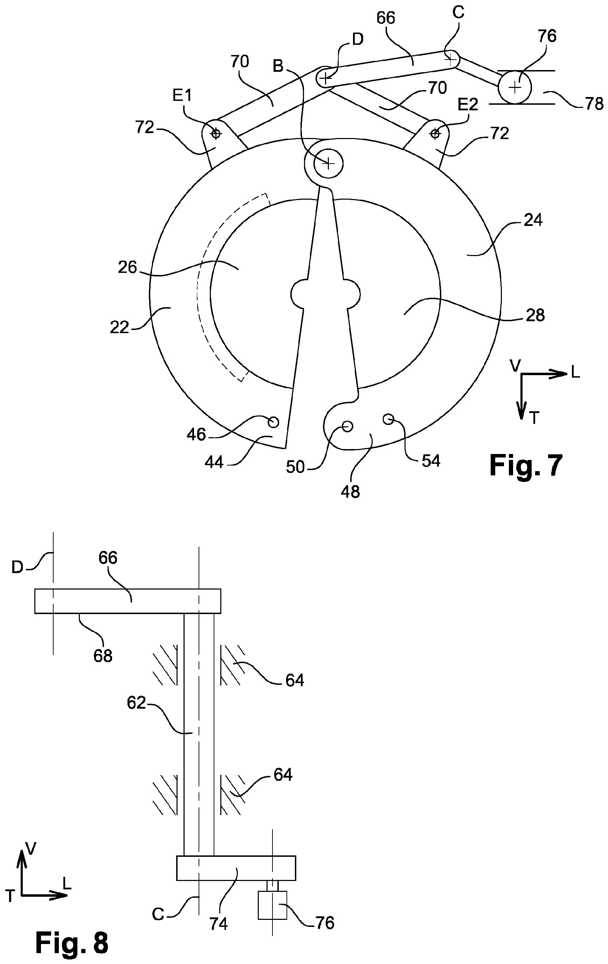

Si les orifices 50 de guidage et les gâches 46 ne sont pas suffisamment en coïncidence, c'est-à-dire que les pênes sont en butée contre les oreilles 44 avant d'atteindre leur état verrouillé, comme illustré à la figure 7, ou que les pênes 52 peuvent coulisser jusqu'à leur état verrouillé en ne passant pas à travers les gâches 46, comme illustré à la figure 4, les supports 22, 24 de moule sont considérés comme étant ouverts.

Le dispositif 42 de verrouillage est apte à être commandé automatiquement, par exemple par came, entre son état déverrouillé et son état verrouillé. A cet effet, tous les pênes 52 sont fixés à une tringle 54 verticale de commande qui est montée coulissante verticalement sur le support 24 de moule avant. La tringle 54 est ici décalée longitudinalement vers l'avant par rapport aux pênes 52. Les pênes 52 sont fixés à la tringle 54 par l'intermédiaire de tiges horizontales de fixation.

La tringle 54 est guidée en coulissement dans des bases de chaque étrier 48. Tous les pênes 52 coulissent ainsi de concert avec la tringle 54. Le coulissement de la tringle 54 est commandé par un suiveur de came, ici un galet 56 agencé à une extrémité inférieure de la tringle 54, qui roule sur un chemin 58 de came de verrouillage. La tringle 54 est rappelée, par exemple élastiquement ou par une deuxième came de verrouillage, vers sa position inférieure, correspondant à l'état déverrouillé du dispositif 42 de verrouillage. Ainsi, lorsque le galet 56 arrive sur un tronçon montant du chemin 58 de came de verrouillage, la tringle 54 coulisse vers le haut, comme indiqué par la flèche "F2" de la figure 6, pour commander les pênes 52 dans leur état verrouillé.

Dans une variante, les pênes peuvent être commandés entre leur état verrouillé et leur état déverrouillé par tout autre moyen connu, par exemple par un moteur électrique.

Par ailleurs, les supports 22, 24 de moule sont automatiquement commandés, ici par came, entre leur position fermée et une position extrême d'ouverture par des moyens mécaniques de commande. Ces moyens de commande sont par la suite décrits en référence aux figures 2 à 4 et 8.

A cet effet, chaque unité 18 de moulage comporte des organes mobiles de commande des supports 22, 24 de moule qui sont liés mécaniquement entre eux, les organes mobiles et les supports 22, 24 de moule formant une chaîne 60 cinématique.

La chaîne 60 cinématique comporte ainsi un arbre 62 de commande d'axe "C" vertical qui est monté à rotation autour de son axe "C" sur la potence 20 par l'intermédiaire de paliers 64 de guidage. L'arbre 62 de commande présente à son extrémité supérieure un bras 66 de manivelle qui s'étend radialement par rapport à l'axe "C" jusqu'à une extrémité 68 libre. Chaque support 22, 24 de moule est lié à l'extrémité 68 libre du bras 66 de manivelle par l'intermédiaire d'une bielle 70 associée. Chaque bielle 70 comporte une première extrémité qui est montée pivotante autour d'un axe "D" vertical commun sur l'extrémité 68 libre du bras 66 et une deuxième extrémité opposée qui est montée pivotante autour d'un axe vertical "E1, E2 associé" sur une chape 72 du support 22, 24 de moule associé. Les chapes 72 sont agencées à proximité de la charnière 36, en étant décalé radialement par rapport à son axe "B".

Ainsi, lorsque l'arbre 62 de commande tourne dans un sens horaire, comme indiqué par la flèche "F3" de la figure 4, le bras 66 de manivelle tire sur les bielles 70, ce qui provoque l'ouverture des supports 22, 24 de moule, comme indiqué par les flèches "F4" de la figure 4. Bien entendu, cette action est réversible pour permettre la fermeture des supports 22, 24 de moule en tournant l'arbre 62 de commande dans l'autre sens.

La rotation de l'arbre 62 de commande est ici commandée au moyen d'un bras 74 de came dont une première extrémité est liée en rotation avec une extrémité inférieure de l'arbre 62 de commande, tandis qu'une deuxième extrémité porte un suiveur 76 de came. Le suiveur 76 de came est ici un galet qui est monté rotatif autour d'un axe vertical au-dessous du bras 74 de came.

Le suiveur 76 de came est reçu dans une rainure 78 de commande qui est fixe par rapport à la base 14. Chaque bord de la rainure forme ainsi un chemin de came dont chacun commande la rotation de l'arbre dans un sens associé.

Dans une variante non représentée de l'invention, la rotation de l'arbre de commande est réalisée au moyen d'un moteur électrique.

Les déplacements des supports 22, 24 de moule sont commandés de manière qu'ils occupent leur position ouverte sur un premier secteur 80 angulaire d'une révolution autour de l'axe "A" par rapport à la base 14, tandis qu'ils occupent normalement leur position fermée sur un deuxième secteur 82 angulaire s'étendant sur le reste de leur révolution autour de l'axe "A". Une extrémité amont du premier secteur 80 angulaire est agencée à proximité d'un point 84 d'extraction des récipients formés, tandis que son extrémité aval est agencée à proximité d'un point 86 d'insertion d'une préforme chaude entre les parties 26, 28 de moules ouvertes.

Théoriquement, à chaque position angulaire des supports 22, 24 de moule autour de leur axe "B" de charnière correspond une unique position de chaque organe de la chaîne 60 cinématique.

Cependant, dans certaines situations, les supports 22, 24 de moule ne peuvent pas se fermer en arrivant dans le deuxième secteur 82 angulaire. C'est par exemple le cas lorsqu'une préforme mal positionnée est décalée par rapport à l'empreinte du moule. Celle-ci est alors interposée entre les deux faces 32 internes, empêchant la fermeture. Afin d'éviter que certains organes de la chaîne 60 cinématique ne soient endommagés dans ce genre de situation, il est connu d'introduire une certaine souplesse dans la chaîne 60 cinématique au niveau d'une liaison, dite souple de la chaîne 60, en autorisant un degré de liberté supplémentaire à cette liaison lorsque l'effort sur cette liaison dépasse une intensité déterminée. Dans l'exemple représenté aux figures, au lieu d'être bloqué rigidement en rotation par rapport à l'arbre 62 de commande, le bras 74 de came est autorisé à pivoter à l'encontre d'un couple résistant, ici de frottement, par rapport à l'arbre 62 de commande.

A l'issue de ce pivotement relatif, le bras 74 de came ne revient pas automatiquement à sa position d'origine par rapport à l'arbre 62 de commande. De ce fait, le bras 74 de came n'est plus orienté de manière à commander les supports 22, 24 de moule dans leur position fermée. Ces derniers sont alors entrouverts alors qu'ils devraient être fermés, comme représenté à la figure 7. Ce type de défaut de positionnement requiert l'intervention d'un technicien pour régler à nouveau correctement la position angulaire du bras 74 de came par rapport à l'arbre 62 de commande.

Ainsi, la chaîne 60 cinématique est divisée en deux parties. Une première partie, dite menante, est agencée entre le suiveur 76 de came et la liaison souple, et une deuxième partie, dite menée, est agencée de la liaison souple jusqu'aux supports 22, 24 de moule. La première partie menant est ici formée uniquement par le bras 74 de came. Chaque organe de la partie menée de la chaîne 60 cinématique occupe une unique position correspondant à une unique position angulaire des supports 22, 24 de moule autour de l'axe "B" de charnière sans décalage possible. Chaque organe de la partie menante est susceptible d'être décalé, ici par pivotement relatif du bras 74 de came par rapport à l'arbre 62 de commande, par rapport à la position angulaire des supports 22, 24 de moule autour de l'axe "B" de charnière.

L'invention propose une solution pour détecter rapidement des supports 22, 24 de moule en position ouverte dans le deuxième secteur 82 angulaire. A cet effet, la station 10 de formage comporte des moyens pour détecter automatiquement lorsque les supports 22, 24 de moule de chaque unité de moulage sont en position fermée indépendamment de l'état du dispositif 42 de verrouillage.

De manière générale, les moyens de détection comportent au moins un capteur 88. Il pourra s'agir d'un capteur avec contact, aussi appelé capteur de position ou d'un capteur sans contact, tel qu'un capteur inductif, un capteur capacitif ou encore un capteur optique. Comme cela sera expliqué plus en détails par la suite, le capteur 88 est soit agencé fixe par rapport à la base 14, soit embarqué sur le carrousel 12.

Les moyens de détection comportent en outre au moins une cible 90 associée à chaque unité 18 de moulage. La cible est apte à être détectée par le capteur 88 lorsqu'elle passe à portée du capteur 88. La position de la cible 90 dépend uniquement de la position des supports 22, 24 de moule autour de leur axe "B" de charnière. La cible 90 est ici fixée à un élément de la chaîne 60 cinématique. Plus particulièrement la cible 90 est fixée à un élément de la partie menée de la chaîne 60 cinématique. Ainsi à chaque position déterminée de la cible 90 correspond une unique position des supports 22, 24 de moule autour de leur axe "B" de charnière à tout moment.

Le capteur 88 sélectionné est avantageusement un capteur 88 binaire, aussi appelé capteur 88 "tout ou rien", qui délivre un signal d'une première valeur déterminée lorsqu'une cible 90 est détectée et un signal d'une deuxième valeur déterminée lorsque qu'aucune cible 90 n'est détectée. En général, lorsqu'aucune cible 90 n'est détectée, le signal prend une valeur nulle, tandis que lorsqu'une cible 90 est détectée le signal prend une valeur de saturation quasi instantanément. Bien entendu, dans les faits, le passage entre les deux valeurs du signal se fait par une rampe de pente très élevée.

Quelle que soit la technologie utilisée, le capteur 88 communique le signal à l'unité 94 électronique de commande de la station 10 de formage.

Lorsque le capteur 88 sélectionné est un capteur de position, il comporte un organe de commutation qui commande un interrupteur. L'organe de commutation est monté pivotant entre une position inactive, dans laquelle le signal émis est nul et vers laquelle il est rappelé élastiquement, et une position active, dans laquelle le signal émis prend la valeur de saturation. L'organe de commutation est agencé de manière à être percuté par la cible 90, basculant ainsi vers sa position active. Bien que ce type de capteur soit adaptable à tous les modes de réalisation décrits par la suite, un exemple d'un tel capteur 88 sera donné par la suite dans le quatrième mode de réalisation de l'invention.

Lorsque le capteur 88 sélectionné est un capteur inductif, la cible 90 est réalisée en un matériau métallique détectable par le capteur 88. La cible 90 présente aussi des dimensions suffisantes pour permettre sa détection. En général, les supports de moule sont réalisés en un matériau qui n'est pas détectable par un tel capteur 88, par exemple en aluminium.

Selon un premier mode de réalisation de l'invention qui est représenté aux figures 9 à 14,

Dans ce premier mode de réalisation, la détection d'ouverture ou de fermeture des supports 22, 24 de moule d'une unité 18 de moulage est effectuée en une position angulaire déterminée de détection par rapport à la base 14. Un unique capteur 88 est agencé à cette position angulaire de détection. Le capteur 88 est ici un capteur inductif. Un tel capteur présente un champ 92 de détection qui est indiqué en traits pointillés aux figures 10 et 12. Le champ 92 de détection forme un angle solide d'ouverture déterminée. Le capteur 88 est apte à détecter des objets, principalement métalliques, passant à sa portée, c'est-à-dire à proximité du capteur 88 et dans son champ 92 de détection.

Le capteur 88 est ici fixe par rapport à la base 14. La position angulaire de détection est par exemple agencée à une extrémité amont du deuxième secteur 82 angulaire, à la sortie du premier secteur 80 angulaire, comme indiqué en exemple à la figure 1. Le capteur 88 est agencé à ladite position angulaire de détection, à la périphérie du carrousel 12, de manière que son champ 92 de détection soit orienté transversalement vers l'axe "A" de rotation du carrousel 12. Il est agencé à hauteur des supports 22, 24 de moule de manière que ces derniers passent tour à tour dans le champ 92 de détection lors de la rotation du carrousel 12.

Les moyens de détection comportent ici deux cibles 90A, 90B dont chacune est fixée à un support 22, 24 de moule à la même hauteur que le capteur 88. Chaque cible 90A, 90B est agencée pour être détectée lors de la rotation du carrousel 12. Chaque cible 90A, 90B est respectivement agencée le long d'un bord 40, 38 libre du support 24, 22 de moule associé. Ainsi, les cibles 90A, 90B sont écartées l'une de l'autre lors du passage des supports 22, 24 de moule de leur position fermée à une position ouverte par pivotement autour de l'axe "B" de charnière.

Par exemple, la première cible 90A est agencée sur le support 24 de moule avant, sur l'un des étriers 48. La deuxième cible 90B est agencée sur le support 22 de moule arrière, sur l'une des oreilles 44.

Dans l'exemple représenté à la figure 9, en position fermée des supports 22, 24 de moule, les cibles 90A, 90B sont espacées d'une première distance "d1". Dès que les supports 22, 24 de moule commencent à s'ouvrir, les deux cibles 90A, 90B sont écartés d'une distance "d2" supérieure à la distance "d1".

La distance "d1" peut être légèrement positive, nulle ou négative si les deux cibles 90A, 90B se chevauchent.

Avantageusement, la distance "d1" est suffisamment faible pour que, lorsque les supports 22, 24 de moule passent en position fermée à portée du capteur 88, l'espace entre les deux cibles 90A, 90B ne soit pas détecté. Ceci est représenté à la figure 13 qui est un diagramme qui montre la valeur du signal en fonction du temps lors du passage des supports 22, 24 de moule fermés à portée du capteur 88. On observe que le capteur 88 détecte la première cible 90A, le signal passant de sa valeur nulle, indiquée par le chiffre zéro, à sa valeur de saturation, indiquée par le chiffre un par une rampe 96A montante. La valeur du signal demeure à saturation lorsque l'espacement "d1" passe devant le capteur 88, car le capteur n'est pas assez sensible pour le détecter. Le signal revient à sa valeur nulle lorsque la deuxième cible 90B sort de sa portée.

Lorsque qu'une seule rampe 96A montante est détectée pendant une durée "Δt" déterminée, l'unité 94 électronique de commande considère ainsi que les supports 22, 24 de moule occupent leur position fermée.

Au contraire, lorsque les supports 22, 24 de moule ne sont plus fermés, l'écart "d2" entre les deux cibles 90A, 90B augmente suffisamment pour être détecté par le capteur 88. Ainsi, comme représenté sur le diagramme de la figure 14, le signal émis par le capteur 88 revient à sa valeur nulle avant le passage de la deuxième cible 90B à sa portée.

Lorsque qu'une deuxième rampe 96B montante est détectée à compter de la première rampe 96A avant la fin de la durée "Δt" déterminée, l'unité 94 électronique de commande considère ainsi que les supports 22, 24 de moule ne sont pas en position fermée.

En variante de réalisation de ce premier mode de réalisation, l'écart "d1" entre les deux cibles 90A, 90B en position fermée des supports de moule est suffisant pour être détecté par le capteur 88. Dans ce cas, l'unité électronique de commande considèrera que les supports de moule sont fermés si la durée s'écoulant entre deux rampes montantes est inférieure ou égale à un seuil déterminé et que les moules sont ouverts si ladite durée est supérieure audit seuil déterminé.

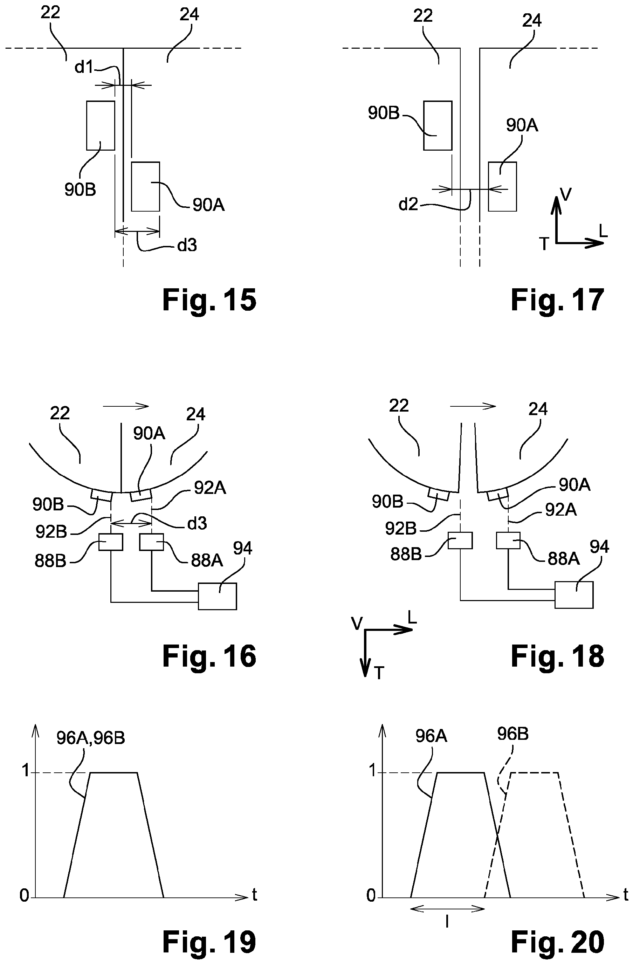

Selon un deuxième mode de réalisation de l'invention qui est représenté aux figures 15 à 20, les moyens de détection de l'ouverture ou de la fermeture des supports 22, 24 de moule à la position angulaire de détection comportent ici deux capteurs 88A, 88B fixes par rapport à la base 14.

Comme dans le premier mode de réalisation, les deux capteurs 88A, 88B sont ici des capteurs inductifs. Leurs champ 92A, 92B de détection respectifs sont indiqués en traits pointillés aux figures 16 et 18. Chaque capteur 88A, 88B est ainsi apte à détecter des objets, principalement métalliques, passant à leur portée.

Les deux capteurs 88A, 88B sont agencés à proximité l'un de l'autre. La position angulaire de détection est agencée à une extrémité amont du deuxième secteur 82 angulaire, à la sortie du premier secteur 80 angulaire, de manière similaire au capteur 88 de la figure 1. Les capteurs 88A, 88B sont agencés à ladite position angulaire de détection, à la périphérie du carrousel 12, de manière que leur champ 92A, 92B de détection soit orienté transversalement vers l'axe "A" de rotation du carrousel 12. Ils sont agencés à hauteur des supports 22, 24 de moule de manière que ces derniers passent tour à tour dans leur champ 92A, 92B de détection lors de la rotation du carrousel 12.

Les capteurs 88A, 88B sont décalés verticalement l'un par rapport à l'autre. Dans l'exemple représenté aux figures, le capteur 88A, dit inférieur, est agencé au-dessous du capteur 88B, dit supérieur.

Les capteurs 88A, 88B sont aussi décalés longitudinalement l'un par rapport à l'autre. A titre d'exemple non limitatif, le capteur 88A inférieur est ici agencé longitudinalement en avant du capteur 88B supérieur.

Comme dans le premier mode de réalisation, les moyens de détections comportent aussi deux cibles 90A, 90B dont chacune est fixée à un support 22, 24 de moule.

Au moins la cible 90B fixée sur le support 22 de moule arrière par rapport au sens de rotation du carrousel 12 est agencée pour être détectée uniquement par un seul des deux capteurs, ici le capteur 88B supérieur. A cet effet, la cible 90B est fixée à la même hauteur que le capteur 88B supérieur, et elle présente des dimensions telle qu'elle ne s'étend pas verticalement vers le bas jusqu'au champ 92A de détection du capteur 88A inférieur.

L'autre cible 90A fixée sur le support 24 de moule avant est détectée par l'autre des deux capteurs, ici le capteur 88A inférieur. A cet effet, la cible 90A est agencée au moins à la hauteur du capteur 88A inférieur. La cible 90A est ici agencée de manière à être détectée uniquement par le capteur 88A inférieur. Ainsi, dans l'exemple représenté aux figures 15 et 17 la cible 90A ne s'étend pas verticalement vers le haut jusqu'au champ 92B de détection du capteur 88B supérieur.

Chaque cible 90A, 90B est respectivement agencée le long d'un bord 40, 38 libre du support 24, 22 de moule associé. Ainsi, les cibles 90A, 90B sont écartées l'une de l'autre lors du passage des supports 22, 24 de moule de leur position fermée à une position ouverte par pivotement autour de l'axe "B" de charnière.

Par exemple, la première cible 90A est agencée sur le support 24 de moule avant, sur l'un des étriers 48. La deuxième cible 90B est agencée sur le support 22 de moule arrière, sur l'une des oreilles 44.

Dans l'exemple représenté aux figures 15 et 17, en position fermée des supports 22, 24 de moule, les cibles 90A, 90B sont espacées d'une première distance "d1". Dès que les supports 22, 24 de moule commencent à s'ouvrir, les deux cibles 90A, 90B sont écartés d'une distance "d2" supérieure à la distance "d1".

Les supports 22, 24 de moule sont considérés comme fermés lorsque les deux capteurs 88A, 88B commencent à détecter leur cible 90A, 90B associée à un intervalle de temps inférieur ou égal à une durée "Δt" déterminée, les supports 22, 24 de moule étant considérés comme ouverts lorsque l'intervalle est supérieur à ladite durée "Δt" déterminée.

Dans le mode de réalisation représenté aux figures 15 à 20, les bords avant des cibles 90A, 90B sont espacés d'une distance "d3" déterminée lorsque les supports 22, 24 de moule occupent leur position fermée. Les capteurs 88A, 88B sont décalés longitudinalement l'un par rapport à l'autre de ladite distance "d3" déterminée. Les supports 22, 24 de moule sont ainsi considérés comme fermés lorsque les cibles 90A, 90B sont détectées simultanément par les deux capteurs 88A, 88B, c'est-à-dire lorsque la durée "Δt" déterminée est égale à zéro.

Ainsi, en se reportant à la figure 19, lorsque que les rampes 96A, 96B montantes émises par chacun des capteurs 88A, 88B sont émises simultanément, l'unité 94 électronique de commande considère que les supports 22, 24 de moule occupent leur position fermée.

Au contraire, lorsque les supports 22, 24 de moule ne sont plus fermés, l'écart "d2" entre les deux cibles 90A, 90B augmente suffisamment pour décaler la détection de la cible 90A, 90B par chacun des capteurs 88A, 88B associé. Ainsi, comme représenté sur le diagramme de la figure 20, le signal émis par le capteur 88A inférieur passe à sa valeur de saturation "1" avant le passage de la deuxième cible 90B à portée du capteur 88B supérieur. La rampe 96B montante émise par le capteur 88B supérieur intervient donc après un intervalle "I" de temps strictement positif après l'émission de la rampe 96A montante par le capteur 88A inférieur. L'unité 94 électronique de commande considère alors que les supports 22, 24 de moule ne sont pas en position fermée.

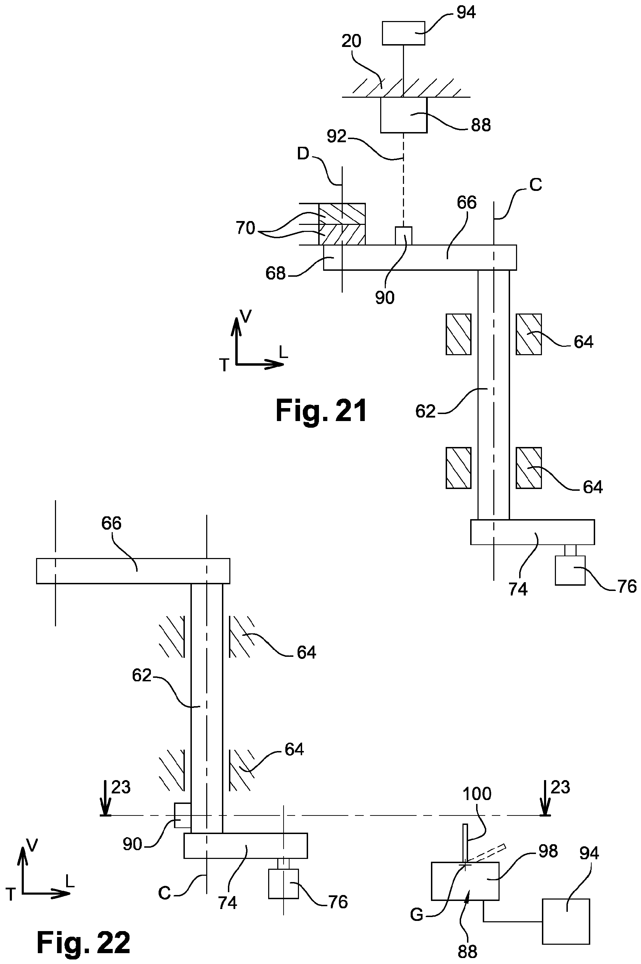

Selon un troisième mode de réalisation de l'invention qui est représenté à la figure 21, chaque unité 18 de moulage comporte un capteur 88 associé qui est monté fixe sur le carrousel 12. Le capteur 88 est plus particulièrement fixé à la potence 20 de l'unité 18 de moulage associée. Dans l'exemple représenté à la figure 21, le capteur 88 est ici un capteur inductif. Un tel capteur présente un champ 92 de détection qui est indiqué en traits pointillés à la figure 21. Le champ 92 de détection forme un angle solide d'ouverture déterminée. Le capteur 88 est apte à détecter des objets, principalement métalliques, passant à sa portée, c'est-à-dire à proximité du capteur 88 et dans son champ 92 de détection.

Chaque unité 18 de moulage comporte une cible 90 qui est fixée à l'un des éléments de sa chaîne 60 cinématique, plus particulièrement sur la partie menée de la chaîne 60 cinématique, par exemple sur l'une des bielles 70, sur le bras 66 de manivelle ou sur l'arbre 62 de commande. Dans l'exemple représenté à la figure 21, la cible 90 est fixée sur le bras 66 de manivelle. De préférence, la cible 90 est agencée à proximité de l'extrémité 68 libre du bras 66 de manivelle car l'amplitude du déplacement est plus importante qu'à proximité de l'axe "C" de charnière.

La cible 90 est ici agencée de manière à être à portée du capteur 88 uniquement lorsque les supports 22, 24 de moule sont en position fermée et hors de portée du capteur 88 lorsque les supports 22, 24 de moule ne sont plus en position fermée.

Ainsi, lorsque le capteur 88 émet un signal à valeur de saturation à destination de l'unité 94 électronique de commande, cela signifie que les supports 22, 24 de moule sont fermés, tandis que lorsqu'il émet un signal à valeur nulle, cela signifie que les supports 22, 24 de moule occupent une position ouverte.

En variante, la cible 90 est agencée à portée du capteur 88 lorsque les supports 22, 24 de moule ne sont pas en position fermée, et hors de portée du capteur 88 lorsque les supports 22, 24 de moule sont en position fermée. Ainsi, lorsque le capteur 88 émet un signal à valeur nulle à destination de l'unité 94 électronique de commande, cela signifie que les supports 22, 24 de moule sont fermés, tandis que lorsqu'il émet un signal à valeur de saturation, cela signifie que les supports 22, 24 de moule occupent une position ouverte.

Un tel capteur 88 embarqué sur le carrousel 12 permet très avantageusement de savoir si les supports 22, 24 de moule sont en position fermée quelle que soit leur position angulaire autour de l'axe "A" de rotation du carrousel 12. Néanmoins, pour permettre à l'unité 94 électronique de commande de connaître cette position angulaire, la station 10 de formage comporte des moyens pour déterminer la position angulaire du carrousel 12 par rapport à sa base à tout instant. Par exemple, un codeur angulaire (non représenté) est agencé sur un élément tournant dont la vitesse de rotation est proportionnelle à celle du carrousel 12. Par exemple le codeur est agencé sur un arbre central du carrousel 12.

Selon un quatrième mode de réalisation de l'invention qui est représenté aux figures 22 à 24, la détection d'ouverture ou de fermeture des supports 22, 24 de moule d'une unité 18 de moulage est effectuée en une position angulaire déterminée de détection par rapport à la base 14.

Un unique capteur 88 est agencé à cette position angulaire de détection. Le capteur 88 est ici un capteur de position. Comme représenté à la figure 22, un tel capteur présente une embase 98 qui est fixée à la base 14 du carrousel 12. Il comporte aussi un organe 100 de commutation, qui est ici formé par un levier monté basculant autour d'un axe transversal "G" entre une position inactive vers laquelle il est rappelé élastiquement, ici représentée en trait plein, et une position active, ici représentée en traits interrompus. En position inactive, l'organe 100 de commutation s'étend globalement verticalement vers le haut, tandis qu'en position active, il est basculé en avant vers le bas.

Lorsque l'organe 100 de commutation occupe sa position inactive, le signal émis par le capteur 88 présente une valeur nulle, tandis que lorsqu'il occupe sa position active, le signal émis par le capteur 88 présente sa valeur de saturation.

Le capteur 88 est apte à détecter des objets qui percutent l'organe 100 de commutation pour le faire basculer vers sa position active. La portée du capteur 88 est ainsi déterminée par les dimensions et la forme de l'organe 100 de commutation.

La position angulaire de détection est par exemple agencée à une extrémité amont du deuxième secteur 82 angulaire, à la sortie du premier secteur 80 angulaire, de manière similaire au capteur 88 représenté en exemple à la figure 1.

Chaque unité 18 de moulage comporte une cible 90 qui est fixée à l'un des éléments de sa chaîne 60 cinématique, plus particulièrement sur la partie menée de la chaîne 60 cinématique, par exemple sur l'une des bielles 70, sur le bras 66 de manivelle ou sur l'arbre 62 de commande. Dans l'exemple représenté aux figures 22 à 24, la cible 90 est fixée sur l'arbre 62 de commande. Plus précisément, la cible 90 est ici agencée vers le bas de l'arbre 62 de commande, de manière à faciliter l'agencement du capteur 88 sur la base 14 du carrousel 12.

La cible 90 est ici formée par une plaque, par exemple une tôle métallique, qui est agencée en saillie radialement par rapport à l'arbre 62 de commande. La cible 90 est solidaire en rotation de l'arbre 62 de commande.

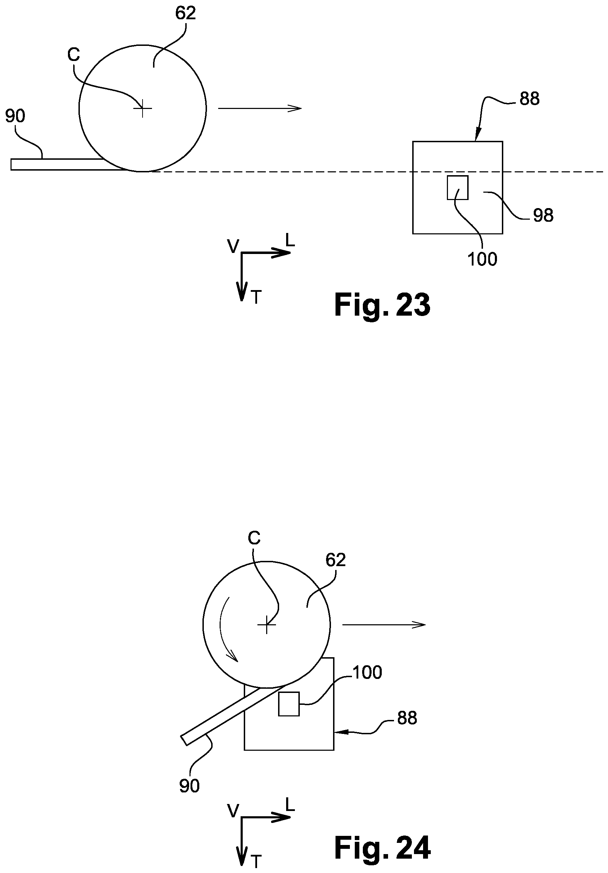

Lorsque les supports 22, 24 de moule sont en position fermée, l'arbre 62 de commande est tourné de manière que l'organe 100 du capteur ne soit pas sur le trajet de la cible 90. En d'autres termes, la cible 90 n'est pas à portée du capteur 88. Cette configuration est par exemple représentée à la figure 23. Lors de son passage par la position angulaire de détection, la cible 90 passe ainsi à côté de l'organe 100 de commande sans le percuter. Le signal émis demeure de valeur nulle.

Lorsque les supports 22, 24 de moule ne sont plus en position fermée, l'arbre 62 de commande est tourné de manière que l'organe 100 du capteur 88 soit sur le trajet de la cible 90. En d'autres termes, la cible 90 est à portée du capteur 88. Cette configuration est par exemple représentée à la figure 24. Lors de son passage par la position angulaire de détection, la cible 90 percute ainsi l'organe 100 de commande pour le faire basculer vers sa position active. Le signal émis passe à sa valeur de saturation. Puis, l'organe 100 de commande est rappelé élastiquement vers sa position inactive avant le passage de la prochaine unité 18 de moulage par la position angulaire de détection.

En variante, la cible et le capteur sont agencés de manière que la cible ne percute l'organe de commande uniquement lorsque les supports de moule occupent leur position fermée.

Les premier, deuxième et quatrième modes de réalisation permettent de détecter des supports 22, 24 de moule ouverts en une position angulaire de détection déterminée. Bien entendu, il est possible de détecter l'ouverture des supports 22, 24 de moule en d'autres positions angulaires en ajoutant des capteurs 88, 88A, 88B tel que décrit à ces autres positions angulaires.

Les deux premiers modes de réalisation, permettent déjà de détecter des supports de moule en position ouverte en une position angulaire de détection. Néanmoins, lorsque les deux supports de moule sont très largement ouverts, les cibles sont alors hors de portée des capteurs inductifs. Ce quatrième mode de réalisation permet avantageusement de détecter des supports 22, 24 de moule dans une position ouverte, quelle que soit l'amplitude de l'ouverture.

Quel que soit le mode de réalisation mis en oeuvre, lorsque les supports 22, 24 de moule d'une unité 18 de moulage sont détectés en position ouverte par les moyens de détection en dehors du deuxième secteur 82 angulaire déterminé, une étape de mise en sécurité de la station 10 de formage est déclenchée par l'unité 94 électronique de commande.

L'étape de mise en sécurité comporte par exemple une opération d'arrêt d'urgence de la station 10 de formage. Dans ce cas, l'unité 94 électronique de commande interrompt immédiatement la rotation du carrousel 12. Une telle opération d'arrêt d'urgence permet ainsi aux opérateurs de venir vérifier la raison pour laquelle les supports 22, 24 de moule de ladite unité 18 de moulage sont ouverts.

En variante, l'étape de mise en sécurité comporte une opération d'inhibition d'une opération de soufflage liée à l'unité 18 de moulage présentant des supports 22, 24 de moule en position ouverte. Cela permet d'éviter notamment que du fluide sous pression ne soit injecté dans la chambre 35 de compensation de ladite unité 18 de moulage. Une telle opération évite avantageusement d'avoir à interrompre le fonctionnement de la totalité de l'installation.

En plus des opérations déjà décrites, l'étape de mise en sécurité comporte aussi une opération d'alerte d'un opérateur humain, par exemple par des moyens visuels et/ou sonores. Ceci permet notamment aux opérateurs de s'éloigner de la zone à risque le temps de l'arrêt de la station 10 de formage.

Le procédé comporte en outre une étape suivante de vérification de la fermeture des moules qui interdit le redémarrage de la station tant que les supports de moules sont détectés en position ouverte. Cette étape de vérification s'applique aussi bien lorsque la station était déjà en production lors de son arrêt ou lorsque la station passe d'un mode de maintenance, dans lequel certaines opérations sont effectuées manuellement, à un mode de production. Dans ce dernier cas, cela permet d'éviter de démarrer la station lorsqu'un opérateur a omis de refermer manuellement les supports de moules d'une unité de moulage.

## Revendications

1. Station (10) de formage de récipients en matériau thermoplastique par soufflage comportant :
- un carrousel (12) monté rotatif autour d'un axe (A) vertical sur une base (14) ;
- plusieurs unités (18) de moulage portées par le carrousel (12) ;
- chaque unité (18) de moulage comportant deux supports (22, 24) de moule qui sont destinés à porter chacun une partie (26, 28) d'un moule, les supports (22, 24) de moule étant montés mobiles sur le carrousel (12) entre une position ouverte dans laquelle les deux parties (26, 28) de moule sont écartées l'une de l'autre, et une position fermée dans laquelle les deux parties (26, 28) de moule sont jointes ;
- des organes (62, 66, 70) mobiles de commande des supports (22, 24) de moule qui sont liés mécaniquement entre eux, les organes (62, 66, 70, 76) mobiles et les supports (22, 24) de moule formant une chaîne (60) cinématique ;
- un dispositif (42) de verrouillage des supports (22, 24) moule en position fermée commandé entre un état déverrouillé et un état verrouillé ;
**caractérisée en ce que** la station (10) de formage comporte des moyens pour détecter automatiquement lorsque les supports (22, 24) de moule de chaque unité (18) de moulage sont en position fermée indépendamment de l'état du dispositif (42) de verrouillage.

2. Station (10) selon la revendication précédente, **caractérisée en ce que** les moyens de détection comportent :
- au moins un capteur (88, 88A, 88B) ;
- au moins une cible (90, 90A, 90B) associée à chaque unité (18) de moulage qui est apte à être détectée par le capteur (88, 88A, 88B) lorsqu'elle passe à portée du capteur (88, 88A, 88B), la position de la cible (90, 90A, 90B) dépendant uniquement de la position des supports (22, 24) de moule par rapport au carrousel (12).

3. Station (10) selon la revendication précédente, **caractérisée en ce que** le capteur (88, 88A, 88B) est un capteur binaire qui délivre un signal d'une première valeur déterminée lorsqu'une cible (90 90A, 90B) est détectée et un signal d'une deuxième valeur déterminée lorsque qu'aucune cible (90 90A, 90B) n'est détectée.

4. Station (10) selon la revendication précédente, **caractérisé en ce que** le capteur (88, 88A, 88B) est un capteur sans contact, tel qu'un capteur inductif.

5. Station (10) selon la revendication 3, **caractérisée en ce que** le capteur (88) est un capteur de position qui comporte un interrupteur qui est commuté par contact avec la cible (90).

6. Station (10) selon l'une quelconque des revendications 2 à 5, **caractérisé en ce que** les moyens de détection comportent :
- au moins un capteur (88, 88A, 88B) fixe par rapport à la base (14) ;
- deux cibles (90A, 90B) dont chacune est fixée à un des supports (22, 24) de moule de chaque unité (18) de moulage à la même hauteur que le capteur (88), chaque cible (90A, 90B) étant agencée pour être détectée lors de la rotation du carrousel (12), les cibles (90A, 90B) étant écartées l'une de l'autre lors du passage de la position fermée à une position ouverte des supports (22, 24) de moule.

7. Station (10) selon la revendication précédente, **caractérisé en ce qu'**en position fermée des supports (22, 24) de moule, l'écart (d1) entre les deux cibles (90A, 90B) n'est pas détectable par le capteur (88), tandis que dans une position ouverte des supports (22, 24) de moule, l'écart (d2) entre les deux cibles (90A, 90B) est détecté par le capteur (88).

8. Station (10) selon la revendication 6, **caractérisé en ce que** les moyens de détection comportent deux capteurs (88A, 88B) fixes par rapport à la base (14), les supports (22, 24) de moule étant considérés comme fermés lorsque les deux capteurs (88A, 88B) détectent une cible (90A, 90B) à un intervalle de temps inférieur ou égal à une durée (Δt) déterminée, les supports (22, 24) de moule étant considérés comme ouvert lorsque l'intervalle est supérieur à ladite durée (Δt) déterminée.

9. Station (10) selon la revendication précédente, **caractérisé en ce que** les supports (22, 24) de moule sont considérés comme fermés lorsque les cibles (90A, 90B) sont détectées simultanément par les deux capteurs (88A, 88B).

10. Station (10) selon l'une quelconque des revendications 2 à 5, **caractérisée en ce que** la cible (90) est fixée à l'un des éléments de la chaîne (60) cinématique de chaque unité (18) de moulage.

11. Station (10) selon la revendication précédente, **caractérisé en ce que** chaque unité (18) de moulage comporte un capteur (88) associé monté fixe sur le carrousel (12).

12. Station (10) selon l'une quelconque des revendications 6 à 11, **caractérisée en ce que** la cible (90) est à portée du capteur (88) uniquement lorsque les supports (22, 24) de moule sont en position fermée et hors de portée du capteur (88) lorsque les supports (22, 24) de moule ne sont plus en position fermée.

13. Station (10) selon l'une quelconque des revendications 6 à 11, **caractérisée en ce que** la cible (90) est à portée du capteur (88) lorsque les supports (22, 24) de moule ne sont pas en position fermée, et hors de portée du capteur (88) lorsque les supports (22, 24) de moule sont en position fermée.

14. Station (10) selon l'une quelconque des revendications 12 ou 13, **caractérisée en ce que** la chaîne (60) cinématique comporte un arbre (62) de commande duquel s'étend un bras (66) de manivelle qui est relié à chaque support (22, 24) de moule par une bielle (70) associée.

15. Procédé de commande d'une station (10) de formage réalisée selon l'une quelconque des revendications précédentes, les supports (22, 24) des unités de moulage étant normalement commandés en position ouverte lors de leur passage dans un secteur (82) angulaire déterminé par rapport à la base (14), et en position fermée sur le reste de leur trajet, **caractérisé en ce que** lorsque les supports (22, 24) de moule d'une unité (18) de moulage sont détectés en position ouverte par les moyens de détection en dehors du secteur (82) angulaire déterminé, une étape de mise en sécurité de la station (10) de formage est déclenchée.
